(19)

Europäisches
Patentamt
European
Patent Office
Office européen
des brevets

(11) **EP 1 819 118 A2**

(12) **EUROPEAN PATENT APPLICATION**

(43) Date of publication:
**15.08.2007 Bulletin 2007/33**

(51) Int Cl.:
*H04L 27/26* (2006.01)　　　*H04L 5/02* (2006.01)

(21) Application number: **07002952.5**

(22) Date of filing: **12.02.2007**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **11.02.2006　KR 20060013352
10.02.2007　KR 20070014105**

(71) Applicant: **Samsung Electronics Co., Ltd.
Suwon-si, Gyeonggi-Do (KR)**

(72) Inventors:
 • **Cho, Yun-Ok
 Yeongtong-gu
 Suwon-si
 Gyeonggi-do (KR)**

 • **Kwon, Hwan-Joon
 Yeongtong-gu
 Suwon-si
 Gyeonggi-do (KR)**
 • **Yu, Jae-Chon
 unknown (KR)**
 • **Kim, Dong-Hee
 Yeongtong-gu
 Suwon-si
 Gyeonggi-do (KR)**
 • **Lim, Yeon-Ju
 Yeongtong-gu
 Suwon-si
 Gyeonggi-do (KR)**

(74) Representative: **Grünecker, Kinkeldey,
Stockmair & Schwanhäusser
Anwaltssozietät
Maximilianstrasse 58
80538 München (DE)**

(54) **Method and apparatus for allocating transmission resources and signaling the allocated transmission resources for frequency diversity**

(57)　A method and apparatus for allocating resources and signaling the allocated resources in an FDMA communication system where different frequency resources are allocated to different UEs for data transmission are provided, in which at least one of a plurality of subbands is allocated to a UE, wherein subbands are logical resource units in a one-to-one corespondence to subcarrier sets with offsets, the subband index of each of the subbands being a Bit-Reverse Order (BRO) representation of the binary value of an offset indicating the position of a first subcarrier in a subcarrier set corresponding to the each subband, resource allocation information indicating the allocated at least one subband is sent to the UE, and one of data transmission and reception to and from the UE is performed in at least one subcarrier set corresponding to the at least one subband indicated by the resource allocation information.

FIG.3

**EP 1 819 118 A2**

**Description**

**BACKGROUND OF THE INVENTION**

1. Field of the Invention

The present invention generally relates to a Frequency Division Multiple Access (FDMA) communication system. More particularly, the present invention relates to a method and apparatus for allocating resources to terminals in such a way that they send/receive data using different frequency resources.

2. Description of the Related Art

FDMA schemes include Orthogonal Frequency Division Multiplexing (OFDM) that sends data on multiple carriers and Single Carrier FDMA (SC-FDMA) proposed for the uplink in the 3rd Generation Partnership Project (3GPP) Long Term Evolution (LTE).

Factors that impede high-speed, high-quality data service in wireless communications are caused by the channel environment on the whole. The wireless channel environment frequently changes due to Additive White Gaussian Noise (AWGN), a fading-incurred change in reception power, shadowing, the Doppler effect caused by the movement and frequency velocity change of a terminal, other user interference, and multipath interference.

Provisioning of the high-speed, high-quality data service in wireless communications requires effective elimination of the above impeding factors. One of transmission schemes used to overcome channel fading in a typical FDMA system such as OFDM and SC-FDMA is frequency diversity. Frequency diversity is a technique relying on the fact that fading is different at different frequencies, in which the modulation symbols of a data packet are sent across a wide frequency band so that the data experiences all channels whether they have good quality or poor quality. As modulation symbols experiencing good quality channels and poor quality channels coexist in the packet, a receiver can demodulate the packet using the symbols experiencing the good channels. Frequency diversity is suitable for traffic which does not allow for customization to the channel environment of a particular user, as delivered on a broadcast channel or a common control channel, or delay-sensitive traffic such as real-time traffic.

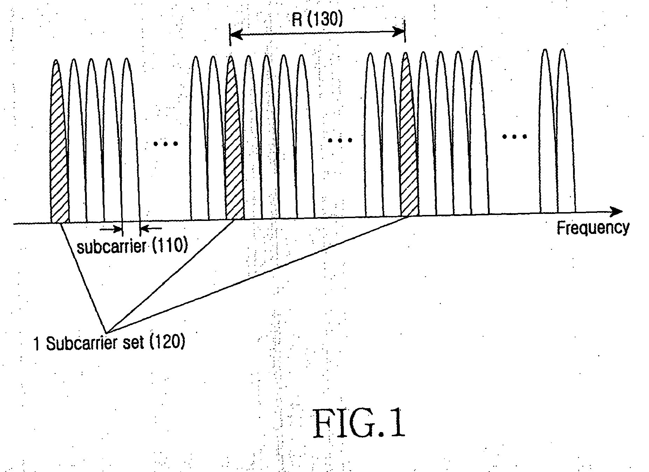

FIG. 1 illustrates an example of a minimum resource unit that can be allocated for data transmission based on frequency diversity.

Referring to FIG. 1, a subcarrier 110 is a basic unit in the frequency domain in an OFDM system, and SC-FDMA can also use frequency resources in units of subcarriers. In this context, the subcarrier is used herein as a generic name of a basic frequency unit available in the OFDM and SC-FDMA systems. The subcarriers of a minimum resource unit are uniformly distributed across a total frequency band to achieve frequency diversity and not are limited to a specific pattern. For a better understanding of the present invention, it is shown that the subcarriers of the minimum resource unit are spaced equidistantly from one another in FIG. 1. A diversity-based transmission scheme for SC-FDMA, known as Distributed FDMA (DFDMA), offers the benefit of low Peak-to-Average Power Ratio (PAPR) by defining a resource unit by equidistant subcarriers and thus achieving a single carrier effect.

A subcarrier set 120 is a minimum resource unit whose subcarriers are marked with slant lines. A variable R 130 is the number of available subcarrier sets, equal to the spacing between subcarriers in one subcarrier set 120. Subcarrier sets are independently defined by their unique offsets each indicating the position of the first subcarrier of a subcarrier set. The subcarrier set 120 has an offset of 0. The subcarrier-specific offset values can be used as resource allocation information.

As described above, a subcarrier set is a minimum unit of resource allocation. Two or more subcarrier sets can be allocated to a User Equipment (UE) or a Mobile Station (MS) according to the amount of transmission data or the channel status of the UE. Independent signaling of the offsets t of subcarrier sets is not efficient. Therefore, subcarrier sets with successive offsets are preferably allocated to the UE to thereby reduce signaling overhead.

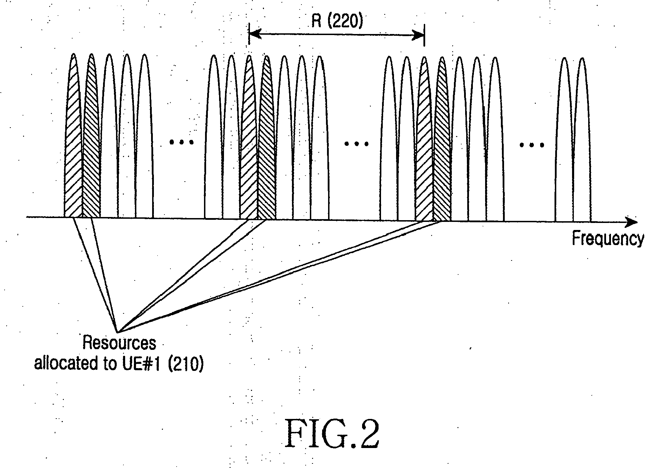

FIG. 2 illustrates a conventional allocation of two or more subcarrier sets to a UE.

Referring to FIG. 2, subcarrier sets 210 are allocated to UE #1 and a variable R 220 is the spacing between subcarriers per subcarrier set. The subcarrier sets 210 have offsets of 0 and 1.

The allocation of subcarrier sets with successive offsets to one UE mitigates the effect of subcarrier distribution across a frequency band, thereby limiting a performance gain that frequency diversity can bring. Especially, DFDMA loses the single carrier property and suffers increased PAPR because the subcarriers allocated to the UE are not equidistant at all.

**SUMMARY OF THE INVENTION**

An aspect of exemplary embodiments of the present invention is to address at least the problems and/or disadvantages and to provide at least the advantages described below. Accordingly, an aspect of exemplary embodiments of the present invention is to provide a method and apparatus for allocating frequency resources that maximize frequency diversity gain and signaling the allocated frequency resources in an FDMA system.

In accordance with an aspect of exemplary embodiments of the present invention, there is provided a method for allocating frequency resources in an FDMA communication system, in which at least one of subbands mapped to subcarrier sets in a frequency domain is allocated to a UE, the subband index of each of the subbands being a BRO representation of the binary value of an offset indicating the position of a first subcarrier in a subcarrier set corresponding to the each subband, resource allocation information indicating the allocated at least one subband is sent to the UE, and one of data transmission and reception to and from the UE is performed in at least one subcarrier set corresponding to the at least one subband indicated by the resource allocation information.

In accordance with another aspect of exemplary embodiments of the present invention, there is provided a method for being allocated frequency resources in an FDMA communication system, in which resource allocation information indicating at least one of subbands mapped to subcarrier sets in a frequency domain, allocated to a UE, is received from a Node B (or a Base Station (BS)), the subband index of each of the subbands being a BRO representation of the binary value of an offset indicating the position of a first subcarrier in a subcarrier set corresponding to the each subband, and one of data transmission and reception to and from the Node B is performed in at least one subcarrier set corresponding to the at least one subband indicated by the resource allocation information.

In accordance with a further aspect of exemplary embodiments of the present invention, there is provided an apparatus of a Node B for allocating frequency resources in an FDMA communication system, in which a scheduler allocates at least one of subbands mapped to subcarrier sets in a frequency domain to a UE, the subband index of each of the subbands being a BRO representation of the binary value of an offset indicating the position of a first subcarrier in a subcarrier set corresponding to the each subband, a control channel transmitter sends resource allocation information indicating the allocated at least one subband to the UE, and a data transceiver performs one of data transmission and reception to and from the UE in at least one subcarrier set corresponding to the at least one subband indicated by the resource allocation information.

In accordance with still another aspect of exemplary embodiments of the present invention, there is provided an apparatus of a UE for being allocated frequency resources in an FDMA communication system, in which a control channel receiver receives from a Node B resource allocation information indicating at least one of subbands mapped to subcarrier sets in a frequency domain, allocated to the UE, the subband index of each of the subbands being a BRO representation of the binary value of an offset indicating the position of a first subcarrier in a subcarrier set corresponding to the each subband, and a data transceiver performs one of data transmission and reception to and from the Node B in at least one subcarrier set corresponding to the at least one subband indicated by the resource allocation information.

## BRIEF DESCRIPTION OF THE DRAWINGS

The above and other objects, features and advantages of certain exemplary embodiments of the present invention will be more apparent from the following detailed description taken in conjunction with the accompanying drawings, in which:

FIG. 1 illustrates an example of a minimum resource unit that can be allocated for data transmission based on frequency diversity;

FIG. 2 illustrates a conventional allocation of two or more subcarrier sets to a UE;

FIG. 3 illustrates allocation of two or more subcarrier sets to a UE according to an exemplary embodiment of the present invention;

FIG. 4 illustrates a tree signaling structure for signaling resource allocation information according to an exemplary embodiment of the present invention;

FIGs. 5A and 5B are block diagrams of a downlink transmitter and receiver, respectively, according to an exemplary embodiment of the present invention;

FIGs. 6A and 6B are block diagrams of an uplink transmitter and receiver, respectively, according to an exemplary embodiment of the present invention;

FIG. 7 is a flowchart illustrating a downlink transmission operation in a Node B according to an exemplary embodiment of the present invention;

FIG. 8 is a flowchart illustrating a downlink reception operation in a UE according to an exemplary embodiment of the present invention;

FIG. 9 is a flowchart illustrating an uplink transmission operation in the UE according to an exemplary embodiment of the present invention;

FIG. 10 is a flowchart illustrating an uplink reception operation in the Node B according to an exemplary embodiment of the present invention; and

FIG. 11 illustrates resource allocation in an uplink DFDMA system according to an exemplary embodiment of the present invention.

## DETAILED DESCRIPTION OF EXEMPLARY EMBODIMENTS

The matters defined in the description such as a detailed construction and elements are provided to assist in a comprehensive understanding of exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

Exemplary embodiments of the present invention are intended to provide resource allocation that offers a sufficient frequency diversity gain and is implemented by simple signaling, in the case where two or more subcarrier sets are allocated to a UE for data transmission based on frequency diversity. The resource allocation of the present invention is applicable to any diversity transmission in an FDMA system such as OFDM or SC-FDMA.

In accordance with the present invention, minimum resource units (i.e. subcarrier sets) in the frequency domain are reconfigured as logical resource units, subbands in a one-to-one correspondence to the offsets of the minimum resource units and resources are allocated using the subband indexes of subbands. Mapping rules between the offsets of subcarrier sets and subband indexes are presented as the following embodiments of the present invention.

Embodiment 1

An embodiment of the present invention presents a mapping rule for the maximum number of available subcarrier sets R=a power of 2.

Let the offset of a subcarrier set in the frequency domain be denoted by a variable x being an integer ranging between 0 and R-1, and the index of a subband corresponding to the subcarrier set be denoted by a variable y of the same range. Then x can be expressed as the sum of powers of 2 in the following Equation (1):

$$x = \sum_{q=0}^{Q-1} c_{x,q} \cdot 2^q, \quad c_x \in \{0,1\}$$

$$\dots \dots (1)$$

where the coefficients of powers of 2 in x, $c_x$ are either 0 or 1 and Q is derived from R in the following Equation (2):

$$Q = log_2(R)$$

$$\dots \dots (2)$$

y corresponding to x is calculated using the coefficients of equation (1) by the following Equation (3):

$$y_x = \sum_{q=0}^{Q-1} c_{x,Q-(q+1)} \cdot 2^q$$

$$\dots \dots (3)$$

As noted from the above equations, a subband index y corresponding to the offset x of a subcarrier set is the Bit-Reverse Order (BRO) representation of the binary value of the offset z.

For R=16 and Q=4, subband indexes corresponding to the offsets of subcarrier sets are defined according to Equations (1), (2), (3) as follows.

Given x=5, Equation (1) is given as Equation (4):

$$5 = \sum_{q=0}^{3} c_{5,q} 2^q = c_{5,0} \cdot 2^0 + c_{5,1} \cdot 2^1 + c_{5,2} \cdot 2^2 + c_{5,3} \cdot 2^3$$

$$\ldots \ldots (4)$$

From Equation (4), $c_{5,0}=1$, $c_{5,1}=0$, $c_{5,2}=1$, $c_{5,3}=0$. Therefore, y=10 according to Equation (5):

$$
\begin{aligned}
y_5 &= \sum_{q=0}^{3} c_{5,4-(q+1)} \cdot 2^q \\
&= c_{5,3} \cdot 2^0 + c_{5,2} \cdot 2^1 + c_{5,1} \cdot 2^2 + c_{5,0} \cdot 2^3 \\
&= 0 \cdot 2^0 + 1 \cdot 2^1 + 0 \cdot 2^2 + 1 \cdot 2^3 \\
&= 10
\end{aligned}
$$

$$\ldots \ldots (5)$$

That is, the subcarrier offset 5(=0101) corresponds to the subcarrier index 10(=1010) and 1010 is the BRO value of 0101.

Table 1 below lists subband indexes y mapped to the offsets of subcarrier sets x, calculated by Equations (1), (2) and (3). The offsets of subcarrier sets allocated to individual UEs, used as signaling information of conventional resource allocation can be replaced by subband indexes referring to Table 1. For Example, if an index '1' is signaled to a UE, this implies that a subcarrier set with an offset of 8 has been allocated to the UE.

Table 1

| Index (y) | Offset (x) |
|---|---|
| 0 | 0 |
| 1 | 8 |
| 2 | 4 |
| 3 | 12 |
| 4 | 2 |
| 5 | 10 |
| 6 | 6 |
| 7 | 14 |
| 8 | 1 |
| 9 | 9 |
| 10 | 5 |
| 11 | 13 |
| 12 | 3 |
| 13 | 11 |
| 14 | 7 |
| 15 | 5 |

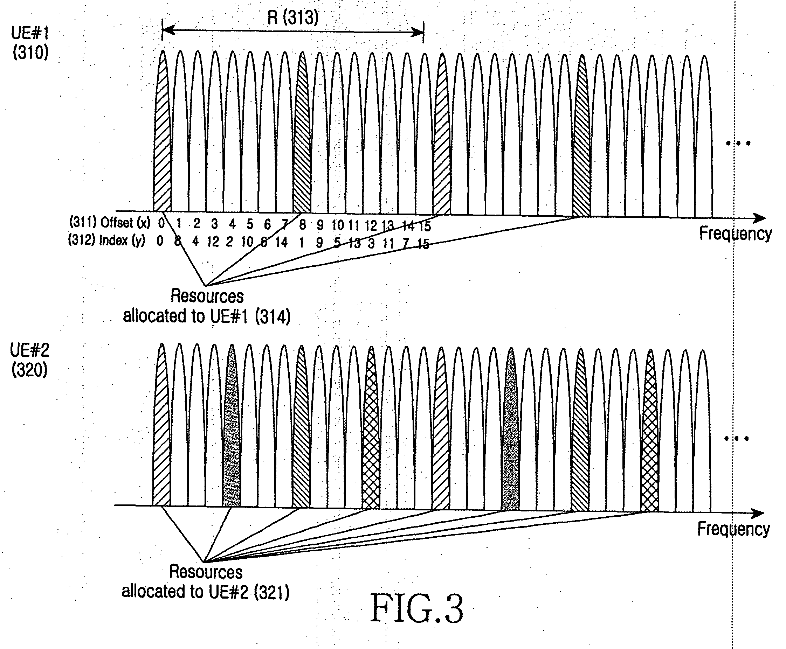

FIG. 3 illustrates allocation of two or more subcarrier sets to a UE according to an exemplary embodiment of the present invention. The following description of FIG. 3 will make it clear that the resource allocation method of the present invention effectively provides a frequency diversity gain.

Referring to FIG. 3, two subcarrier sets are allocated to a first UE 310 (UE #1). Offsets x 311 and indexes y are shown in Table 1. Variable R 313 denotes the number of available subcarrier sets. R is 16 herein. If subbands with indexes of 0 and 1 are allocated to UE #1, subcarrier sets with offsets of 0 and 8 are actually allocated in the frequency domain. Resources 314 are the subcarrier sets with the offsets of 0 and 8 allocated to UE #1. Subcarriers marked with lines slanted from upper right to lower left form the subcarrier set with the index of 0, and subcarriers marked with lines slanted from upper left to lower right form the subcarrier set with the index of 8.

In the illustrated case of FIG. 3, four subcarrier sets are allocated to a second UE 320 (UE #2). With reference to Table 1, subband indexes 0 to 3 allocated to UE #2 indicate subcarrier sets with offsets of 0, 8, 4 and 12 in the frequency domain. Resources 321 are the four subcarrier sets with the offsets of 0, 8, 4 and 12 allocated to UE #2.

As is apparent from the above description, if frequency resources are allocated using subband indexes, even when two or more subcarrier sets are allocated to one UE, all of the subcarriers are distributed uniformly across a total frequency band. Therefore, a higher frequency diversity gain than in the case illustrated in FIG. 2 can be obtained.

For R being less than a power of 2 by 1, a modified embodiment of the present invention is presented as follows. As with the case of R being a power of 2, subband indexes y can be reconfigured in correspondence with subcarrier set offsets x by Equations (1) to (5). Notably, the subcarrier set offsets x range from 0 to R-2. Table 2 and Table 3 below list subband indexes mapped to subcarrier set offsets using Equations (1) to (5).

Table 2 lists subband indexes mapped to subcarrier set offsets when R is 3.

Table 2

| Index (y) | 0 | 1 | 2 |
|---|---|---|---|
| Offset (x) | 0 | 2 | 1 |

Table 3 lists subband indexes mapped to subcarrier set offsets when R is 7.

Table 3

| Index (y) | 0 | 1 | 2 | 3 | 4 | 5 | 6 |
|---|---|---|---|---|---|---|---|
| Offset (x) | 0 | 4 | 2 | 6 | 1 | 5 | 3 |

Embodiment 2

Another embodiment of the present invention presents a mapping rule between the offsets of subcarrier sets and subband indexes when the maximum number of available subcarrier R is not a power of 2. Given R=the product of a power of 2 and an odd number, Equation (6) is shown:

$$R = M \cdot 2^Q, \qquad M \text{ is odd number}$$

$$\ldots \ldots (6)$$

the offset of a subcarrier set, x is expressed as Equation (7):

$$x = r_x + \sum_{q=0}^{Q-1} c_{x,q} \cdot 2^q, \quad c_x \in \{0,1\}$$

$$\ldots \ldots (7)$$

where variables Q and $r_x$ are defined as shown in Equation (8):

$$Q = log_2(R/M)$$
$$r_x = x\%M$$

$$\ldots\ldots(8)$$

In Equation (8), $r_x$ is defined as the remainder of dividing x by M and thus it is an integer between 0 and M-1. A subband index y corresponding to x is calculated by Equation (9):

$$y_x = r_x \cdot 2^Q + \sum_{q=0}^{Q-1} c_{x,Q-(q+1)} \cdot 2^q$$

$$\ldots\ldots(9)$$

A coefficients $c_x$ used in Equations (7) and (8) is 0 or 1.
For R=24, subband indexes corresponding to the offsets of subcarrier sets are defined according to Equations (6) to (9) as follows.
According to Equation (6), M=3 and Q=3 for R=24. If x=13, y is 9 as shown in Equation (10) by computing:

$$13 = r_{13} + c_{13,0} \cdot 3 \cdot 2^0 + c_{13,1} \cdot 3 \cdot 2^1 + c_{13,2} \cdot 3 \cdot 2^2$$
$$= 1 + 0 \cdot 3 \cdot 2^0 + 0 \cdot 3 \cdot 2^1 + 1 \cdot 3 \cdot 2^2$$
$$y_{13} = r_{13} \cdot 2^3 + c_{13,2} \cdot 2^0 + c_{13,1} \cdot 2^1 + c_{13,0} \cdot 2^2$$
$$= 1 \cdot 2^3 + 1 \cdot 2^0 + 0 \cdot 2^1 + 0 \cdot 2^2$$
$$= 9$$

$$\ldots\ldots(10)$$

Table 4 below lists subband indexes y mapped to the offsets of subcarrier sets, x, calculated by Equations (6) to (9).

Table 4

| Index (y) | Offset (x) |
| --- | --- |
| 0 | 0 |
| 1 | 12 |
| 2 | 6 |
| 3 | 18 |
| 4 | 3 |
| 5 | 15 |
| 6 | 9 |
| 7 | 21 |
| 8 | 1 |
| 9 | 13 |
| 10 | 7 |
| 11 | 19 |

(continued)

| Index (y) | Offset (x) |
|---|---|
| 12 | 4 |
| 13 | 16 |
| 14 | 10 |
| 15 | 22 |
| 16 | 2 |
| 17 | 14 |
| 18 | 8 |
| 19 | 20 |
| 20 | 5 |
| 21 | 17 |
| 22 | 11 |
| 23 | 23 |

With use of the mapping rule between subcarrier set offsets and subband indexes, a maximum frequency diversity gain can be achieved if successive subband indexes are allocated. Now a description will be made of an operation for signaling resource allocation information by 1-Dimensional (1D) signaling or tree-type signaling.

The total number of minimum resource units that can be allocated, R, is determined on a cell basis. Thus, R is broadcast or preset, to which the present invention is not limited.

In a modified embodiment of the present invention, subcarrier set offsets are cyclically shifted using a different cyclic shift value for each cell in the mapping relationship between subcarrier set offsets and subband indexes, in order to prevent collision between actual frequency resources that are used through the same sequence of subcarrier sets in a plurality of cells.

For example, if subbands 0, 1, 2 and 3 are mapped to subcarrier set offsets 0, 2, 1, and 3, respectively in cell A, subbands 0, 1, 2 and 3 are mapped to subcarrier set offsets 2, 1, 3, and 0 respectively in cell B, Then, cell A has a cyclic shift value of 0 and cell B has a cyclic shift value of 1. Cell A allocates subband 0 (i.e. subcarrier set offset 0) to an MS within its coverage area, while cell B allocates subband 0 (i.e. subcarrier set offset 2) to an MS within its coverage area. Therefore, inter-cell interference caused by collision between frequency resources in a physical layer is mitigated.

The cyclic shift value of each cell may change every predetermined time period. To be more specific, subcarrier set offsets are cyclically shifted by m every N OFDM symbols in each cell. In example, N is 2. Here, m is a different cyclic shift value for each cell.

It can be further contemplated as an alternative modified embodiment of the present invention that in the case where available frequency resources in a cell are divided into subband groups each including a plurality of subbands, subcarrier set offsets are formed on a subband basis. The term "subband group" refers to a set of subbands having similar frequency characteristics. For example, a BS schedules on a subband group basis and allocates at least one subband selected from a selected subband group to an MS. For example, if subband group 1 includes subbands 0, 1, 2 and 3, these subbands are mapped to subcarrier set offsets 0, 2, 1 and 3, respectively. If subband group 2 includes subbands 0,1, 2 and 3 in the same cell, these subbands are mapped to subcarrier set offsets 0, 2, 1 and 3, respectively. Even this case, a cyclic shift is performed for each subband group.

In a further modified embodiment of the present invention, in the case where available frequency resources in a cell are divided into subband groups each including a plurality of subbands, subcarrier set offsets are created in correspondence with the subbands of all subband groups. For example, if subband group 1 includes subbands 0, 1, 2 and 3 and subband group 2 includes subbands 4, 5, 6 and 7, the subbands of the subband groups are mapped to subcarrier set offsets 0, 4, 2, 6, 1, 5, 3 and 7, respectively. Also in this case, the subcarrier set offsets are cyclically shifted using a different cyclic shift value for each cell. That is, the subcarrier set offsets {0, 4, 2, 6} and {1, 5, 3, 7} each are cyclically shifted for each subband group. Embodiment 3

A third embodiment of the present invention pertains to 1D signaling of resource allocation information. 1D signaling refers to transmission of resource allocation information for UEs within one cell. Therefore, the 1D signaling is viable for a MAP-type signaling channel structure in which each UE can demodulate resource allocation information of other UEs as well as its resource allocation information. That is, if each UE can acquire resource allocation information of other UEs and resources are allocated in an order of successive subband indexes, the UE finds out actual frequency resources allocated to it, referring to the resource allocation information of all UEs.

In the 1D signaling method, resource allocation information for each UE includes the first or last subband index of allocated resources. For instance, if a system with R=16 allocates four minimum resource units to each of four UEs, A, B, C and D, resource allocation information for each UE includes the first subband index of allocated resources. Specifically, the resource allocation information includes "0" for UE A, "4" for UE B, "8" for UE C and "12" for UE D.

UE C discovers that subbands with indexes 8 to 11 are allocated to UE C, referring to the resource allocation information of UE B and UE D, and recognizes from Table 1 that the subband indexes 8 to 11 indicate subcarrier set offsets 1, 9, 5, and 13.

In the case where resource allocation information includes the last subband index instead of the first subband index, the UE finds out its allocated frequency resources, referring to resource allocation information of UEs including itself. This 1D signaling takes as much information as $\log_2(16)=4$ bits for each UE. As described above, mapping between subband indexes and subcarrier set offsets is carried out by Equations (1), (2) and (3) or Equations (6) to (9).

Embodiment 4

A fourth embodiment of the present invention is about tree-type signaling of resource allocation information, in which minimum resource units are represented in the shape of a tree and a node corresponding to allocated resources is signaled to a UE.

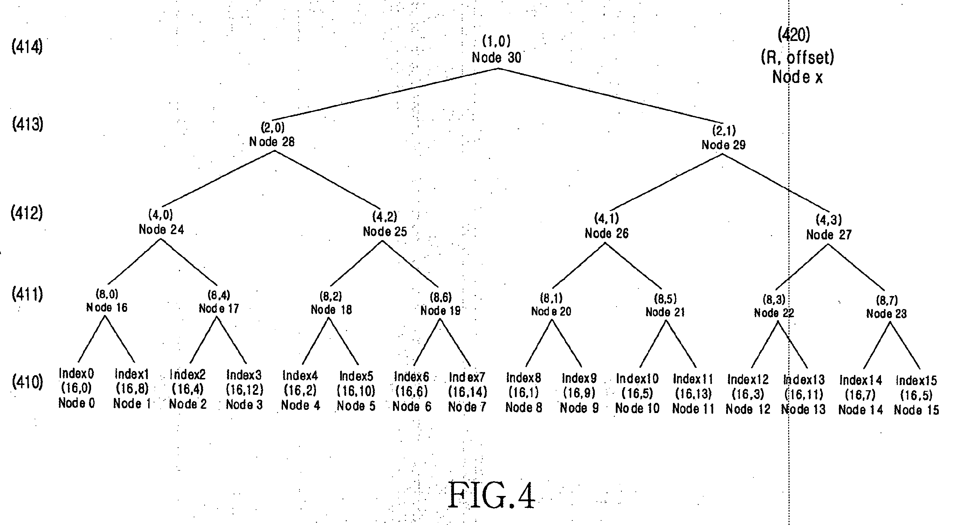

FIG. 4 illustrates a tree signaling structure for signaling resource allocation information according to an exemplary embodiment of the present invention.

Referring to FIG. 4, the illustrated tree structure corresponds to R=16. The tree structure has five layers 410 to 414 each including at least one node 420. Each node 420 is composed of R and a subcarrier set offset and linked to one mother node and two child nodes by branches. In each of the other layers 411 to 414 other than the lowest layer 410, resources represented by each node includes resources for the child nodes of the node.

Sixteen (16) minimum resource units, node 0 to node 16 in the lowest layer 410 correspond to subcarrier sets. The subcarrier sets are arranged in an ascending order of subband indexes and a combination of R(=16) and a subcarrier set offset is represented as one of node 0 to node 15, as shown in Table 1.

In the second lowest layer 411, node 16 to node 23 each correspond to two subcarrier sets. Therefore, R=8. Subcarrier sets 0 and 8 with R=16 in the lowest layer 410 correspond to subcarrier set 0 with R=8 in the second lowest layer 411. Hence, node 16 is equivalent to resources represented by node 0 and node 1.

Similarly, node 24 to node 27 in the third layer 412 counted from the top correspond to four subcarrier sets. Since node 24 represents a subcarrier set with an offset of 0 for R=4, node 24 is equivalent to resources with subcarrier offsets 0, 8, 4 and 12 with R=16. In the second layer 413 counted from the top, nodes 28 and 29 each correspond to eight subcarrier sets. Node 30 in the highest layer 414 corresponds to 16 subcarrier sets, i.e. total frequency resources.

The tree has 31 nodes in total and thus a node can be expressed in five bits and correspondingly signaled as shown in Table 5. If the total resources are equally allocated to UEs A, B, C and D, resource allocation information for UE C includes "11010" indicating node 26, which corresponds to subband indexes 8 to 11, i.e. subcarrier sets of offsets of 1, 9, 5 and 13 as shown in Table 1.

Table 5

| bits | resources | bits | resources | bits | resources | bits | resources |
|---|---|---|---|---|---|---|---|
| 00000 | node 0 | 01000 | node 8 | 10000 | node 16 | 11000 | node 24 |
| 00001 | node 1 | 01001 | node 9 | 10001 | node 17 | 11001 | node 25 |
| 00010 | node 2 | 01010 | node 10 | 10010 | node 18 | 11010 | node 26 |
| 00011 | node 3 | 01011 | node 11 | 10011 | node 19 | 11011 | node 27 |
| 00100 | node 4 | 01100 | node 12 | 10100 | node 20 | 11100 | node 28 |
| 00101 | node 5 | 01101 | node 13 | 10101 | node 21 | 11101 | node 29 |
| 00110 | node 6 | 01110 | node 14 | 10110 | node 22 | 11110 | node 30 |
| 00111 | node 7 | 01111 | node 15 | 10111 | node 23 | 11111 | reserved |

The above tree-type signaling requires 5 bits for signaling resource allocation information. Compared to the 1D signaling method in which each UE has to interpret resource allocation information of other UEs, the resource allocation information of the UE suffices for the UE to know resources allocated to it. Because each node in the tree structure basically represents resources of a successive index, a maximum frequency diversity gain can be achieved irrespective of which node is allocated. For the tree-type signaling, the mapping relationship between subband indexes and subcarrier set offsets is based on Equations (1), (2) and (3).

The mapping rules and signaling methods of the present invention are applicable regardless of the number of minimum resource units allocated to one UE or a resource allocation algorithm. If subcarriers apart from each other by a predetermined spacing are allocated to a UE, the following constraints will be imposed. An example of this case is Distributed Frequency Division Multiple Access (DFDMA) for a Long Term Evolution (LTE) uplink. The DFDMA system is based on allocation of equidistant subcarriers to UEs to achieve low PAPR. The following description is applied commonly to both cases in which R is a power of 2 and R is not a power of 2 (i.e. $R = M \cdot 2^Q$, M is odd number including 1)

1. R is a power of 2 $(R = 2^Q)$
Constraint 1.1: the number of available minimum resource units (N):

$$N = 2^m, \ m = 0, 1, \ldots Q$$

Constraint 1.2: the index of the first minimum resource unit (k):

$$k = rN, \ \ r = 0, \ldots, \frac{R}{N} - 1$$

2. R is not a power of 2 $(R = M \cdot 2^Q, \ M \ is \ odd \ number \ except \ 1)$
Constraint 2.1: the number of available minimum resource units (N):

$$N = 2^m \left( m = 0, 1, \ldots Q \right) or \ M \cdot 2^Q$$

Constraint 2.2: the index of the first minimum resource unit (k):

$$k = rN, \ \ r = 0, \ldots, \frac{R}{N} - 1$$

For R=12 and Q=2, how resources are allocated in the DFDMA system will be described below. According to Equation (6) to (9), when R=12, the mapping relationship between a subcarrier set offset x and a subband index y is given as Table 6 below.

Table 6

| index(y) | offset(x) |
|---|---|
| 0 | 0 |
| 1 | 6 |
| 2 | 3 |
| 3 | 9 |
| 4 | 1 |
| 5 | 7 |
| 6 | 4 |
| 7 | 10 |
| 8 | 2 |
| 9 | 8 |

(continued)

| index(y) | offset(x) |
|----------|-----------|
| 10 | 5 |
| 11 | 11 |

Due to Constraint 2.1, N is 0, 1, 2, 4 or 12. If total resources are allocated to six UEs A to F, UE A is allocated four minimum resource units, UEs B, C and D each are allocated two minimum resource units, and UEs E and F each are allocated one minimum resource unit. According to Constraint 2.2, the subband index of the first minimum resource unit can be 0, 4 or 8 for UE A, 0, 2, 4, 6, 8 or 10 for UEs B, C and D, and one of 0 to 11 for UEs E and F. In this way, resources can be allocated to UEs in many ways without resource overlap among the UEs, fulfilling the constraints.

If the subband index of the first of allocated minimum resource units is signaled to each UE by the MAP-type 1D signaling, subband index 0 is signaled to UE A, subband index 4 to UE B, subband index 6 to UE C, subband index 8 to UE D, subband index 10 to UE E, and subband index 11 to UE F. Based on the mapping relationship described in Table 4, subcarrier offsets 0, 3, 6 and 9 are allocated to UE A, subcarrier sets with offsets of_1 and 7 to UE B, subcarrier sets 4 and 10 to UE C, subcarrier sets 2 and 8 to UE D, subcarrier set 5 to UE E, and subcarrier set 11 to UE F.

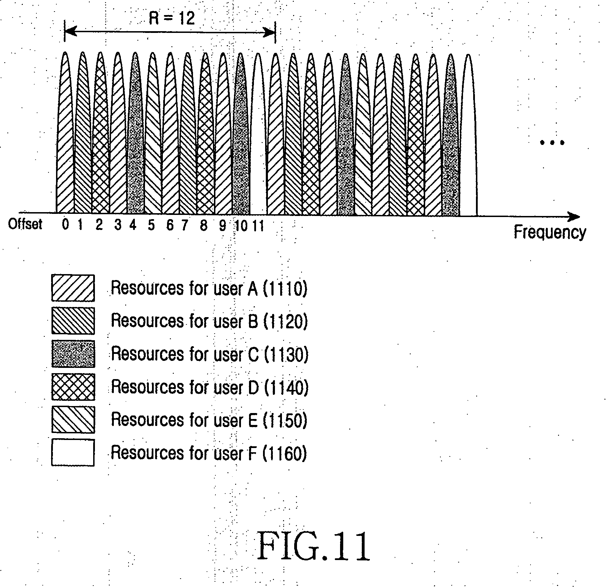

FIG. 11 illustrates resource allocation in the frequency domain in the uplink DFDMA system according to an exemplary embodiment of the present invention. Referring to FIG. 11, resources 1110 to 1160 are subcarrier sets allocated to UEs A to F. It is noted that equidistant subcarriers are allocated to each UE.

Scheduling regarding resource allocation takes place in the Node B in the cellular system. Hence, the Node B has knowledge of information about scheduled resource allocation. The above-described signaling is the operation of sending resource allocation information from the Node B to the UE irrespective of whether the resource allocation information is for downlink transmission or uplink transmission.

For downlink transmission, the Node B sends data using resources allocated to the UE and the UE demodulates the data using resource allocation information received from the Node B.

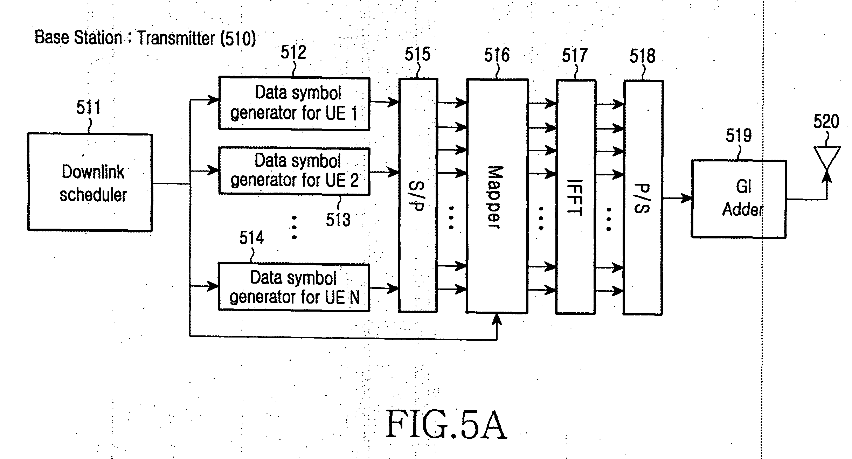

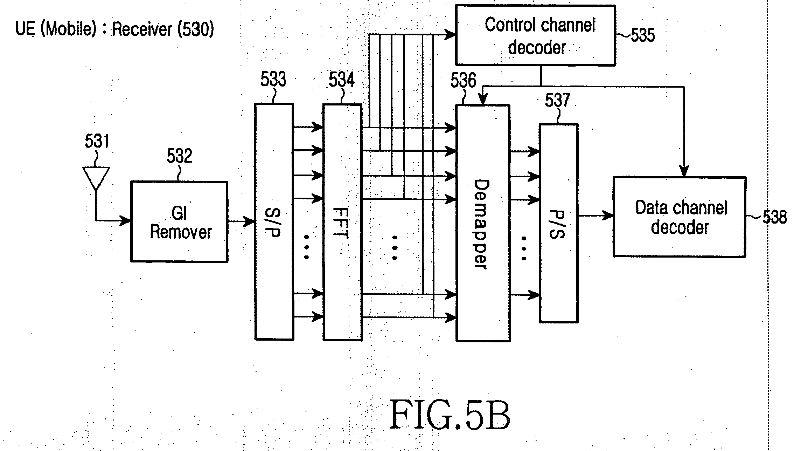

FIGs. 5A and 5B are block diagrams of a downlink transmitter and receiver, respectively, according to exemplary an embodiment of the present inventions. When OFDM is applied to the downlink, the Node B and the UE are configured as follows.

Referring to FIG. 5A, a Node B transmitter 510 is configured for downlink transmission from the Node B. A downlink scheduler 511 determines resource allocation information indicating downlink resources to UEs. Besides the resource allocation information, the downlink scheduler 511 also generates control information including format information of data channels such as a Modulation and Coding Scheme (MCS) for each UE.

A data symbol generator for UE #1 512, a data symbol generator for UE #2 514, and a data symbol generator for UE #N 514 generate data symbols for the UEs based on the control information received from the downlink scheduler 511. The data symbol generators 512, 513 and 514 each may include an error correction encoder, a rate matcher, an interleaver, and a symbol modulator, which is beyond the scope of the present invention and thus will not be described herein.

A Serial-to-Parallel (S/P) converter 515 converts the data symbols to parallel symbol sequences. A mapper 516 maps the parallel data symbols to frequency resources allocated to the UEs. The frequency resources are actual subcarriers corresponding to subband indexes or subcarrier set offsets indicated by the resource allocation information received from the downlink scheduler 511. The mapper 516 also maps the control information received from the downlink scheduler 511 to control channel resources. The control channel resources may be identical to the frequency resources allocated to the UEs or common resources to the UEs depending on a signaling method used.

An Inverse Fast Fourier Transform (IFFT) processor 517 converts the mapped data symbols and control information to time-domain signals. A Parallel-to-Serial (P/S) converter 518 converts the time-domain signals to serial OFDM samples and a Guard Interval (GI) adder 519 inserts GI samples into the OFDM samples. In general, the GI samples are Cyclic Prefix (CP) samples being a copy of part of the OFDM samples. The GI-inserted OFDM symbols are sent on a radio channels via a transmit antenna or transmit antennas 520.

Referring to FIG. 5B, a UE receiver 530 is configured for downlink reception in the UE. A GI remover 532 removes GI samples from a signal received through a receive antenna or receive antennas 531. An S/P converter 533 converts the GI-free samples to parallel signals and a Fast Fourier Transform (FFT) processor 534 converts the parallel signals to frequency-domain signals.

A control channel decoder 535 receives control signals mapped to control channel resources among the frequency-domain signals from the FFT processor 534 and recovers control information from the control signals. A demapper 536 receives the frequency-domain signals from the FFT 534 and extracts data signals sent in frequency resources allocated to the UE based on resource allocation information included in the control information received from the control channel decoder 535. The resource allocation information is decided according to the mapping relationship between subband indexes and subcarrier set offsets, as defined by the equations described in one of the aforedescribed embodiments of the present invention.

A P/S converter 537 serializes the data signals and a data channel decoder 538 decodes the serial signal based on the control information received from the control channel decoder 535, thereby recovering data symbols.

For uplink transmission, the UE receives resource allocation information from the Node B and sends data using uplink resources indicated by the resource allocation information to the Node B.

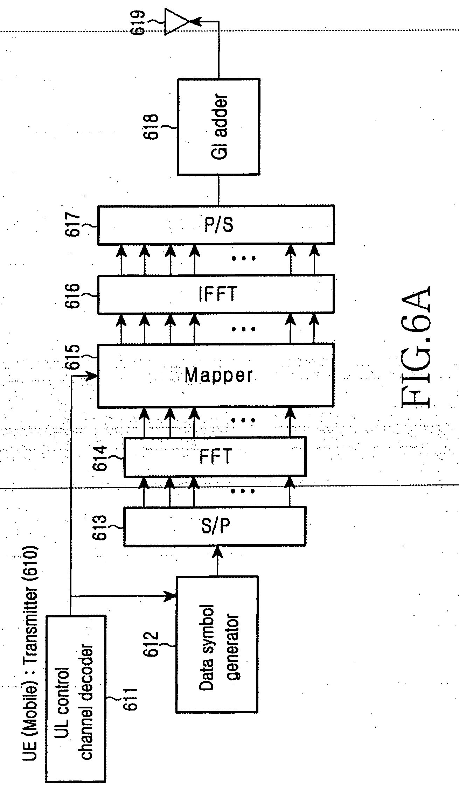

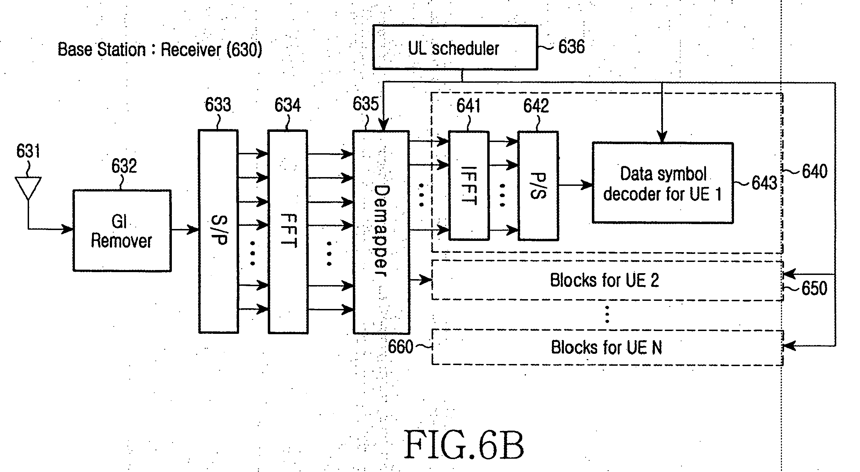

FIGs. 6A and 6B are block diagrams of an uplink transmitter and receiver, respectively, according to exemplary an embodiment of the present inventions. When SC-FDMA is applied to the uplink, the Node B and the UE are configured as follows. In SC-FDMA, data symbols are generated in the time domain. An FFT processor 614 converts the time-domain data symbols to frequency-domain signals and maps the frequency-domain signals to frequency resources, and an IFFT processor 616 returns the mapped frequency signals to time-domain signals.

Referring to FIG. 6A, a UE transmitter 610 is configured for uplink transmission from the UE. A control channel decoder 611 decodes control information received on the downlink in a previous slot, and outputs resource allocation information indicating frequency resources to the UE and format information for data generation. A data symbol generator 612 generates data symbols based on the format information and an S/P converter 613 converts the data symbols to parallel symbol sequences. The FFT processor 614 converts the output of the S/P converter 613 to frequency-domain signals. An FFT size of the FFT processor 614 is equal to the number of the data symbols generated from the data symbol generator 612.

A mapper 615 maps the frequency-domain signals to input tabs of the IFFT processor 616 corresponding to subcarriers allocated to the UE. The frequency resources, i.e. the subcarriers, are indicated by the resource allocation information recovered by the control channel decoder 611. The IFFT 616 converts the mapped signals to the time-domain signals. An FFT size of the IFFT processor 616 is equal to the total number of subcarriers including a GI.

A P/S converter 617 converts the time-domain signals to serial OFDM samples and a GI adder 618 inserts GI samples into the OFDM samples. In general, the GI samples are CP samples being a copy of part of the OFDM samples. The GI-inserted OFDM symbols are sent on a radio channels via a transmit antenna or transmit antennas 619.

Referring to FIG. 6B, a Node B receiver 630 is configured for uplink reception in the Node B. A GI remover 632 removes GI samples from a signal received through a receive antenna or receive antennas 631. An S/P converter 633 converts the GI-free samples to parallel signals and an FFT processor 634 converts the parallel signals to frequency-domain signals.

A demapper 635 separates signals received from UEs from the frequency-domain signals based on resource allocation information for the UEs set in an uplink scheduler 636 and provides the separated signals respectively to data channel receivers 640, 650 and 660 for the UEs. The data channel receivers 640, 650 and 660 have the same configuration, each including an IFFT processor 641, a P/S converter 642, and a data symbol decoder 643.

The IFFT 641 converts the signal received in frequency resources allocated to UE # 1 to time-domain signals and the P/S converter 642 serializes the time-domain signals. The data symbol decoder 643 recovers transmission data by decoding the serial signal. The data channel receivers 640, 650 and 660 operate in the same manner regarding the signals received in frequency resources allocated to UE #1, UE #2, and UE #N.

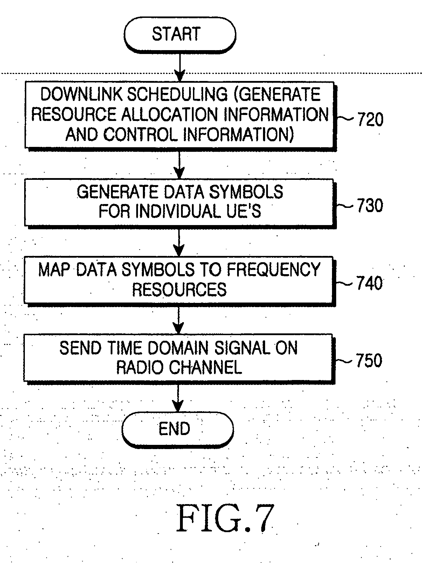

FIG. 7 is a flowchart illustrating a downlink transmission operation in the Node B according to an exemplary embodiment of the present invention.

Referring to FIG. 7, the Node B performs downlink scheduling based on channel information of each of the UEs in step 720. During the downlink scheduling, resource allocation information and format information for data generation (modulation and error coding) for the UE are generated.

The Node B generates data symbols for the UEs based on the format information in step 730 and maps the data symbols to actual frequency resources, i.e. subcarriers, based on the resource allocation information in step 740. The Node B converts the mapped signals to time-domain signals and sends them on a radio channel in step 750.

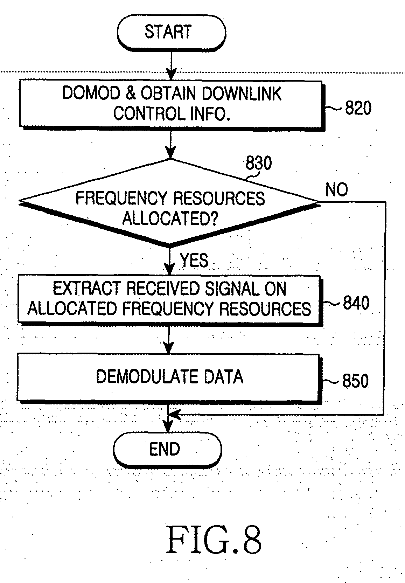

FIG. 8 is a flowchart illustrating a downlink reception operation in the UE according to an exemplary embodiment of the present invention.

Referring to FIG. 8, the UE separates a control channel signal sent in preset control channel resources from a received downlink signal and recovers control information for the downlink in step 820. In step 830, the UE determines whether resources have been allocated to the UE and data has been sent in the allocated resources to the UE, based on the control information. If resources have been allocated and data transmitted, the UE separates a signal destined for the UE from the allocated resources in step 840 and recovers data symbols from the separated signal in step 850. On the other hand, in the absence of allocated resources or in case of no data transmission, the UE ends the algorithm of the present invention.

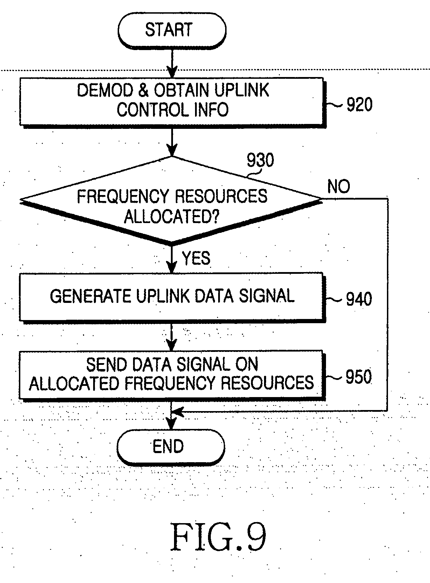

FIG. 9 is a flowchart illustrating an uplink transmission operation in the UE according to an exemplary embodiment of the present invention.

Referring to FIG. 9, the UE acquires control information for the uplink by demodulatinga received downlink control channel signal in step 920 and determines based on the control information whether frequency resources have been allocated to the UE for uplink transmission in step 930. If the frequency resources have been allocated, the UE generates data symbols in step 940 and maps the data symbols to subcarriers of the allocated frequency resources and sends them to the Node B in step 950. On the other hand, if no frequency resources have been allocated to the UE, the UE ends the algorithm of the present invention.

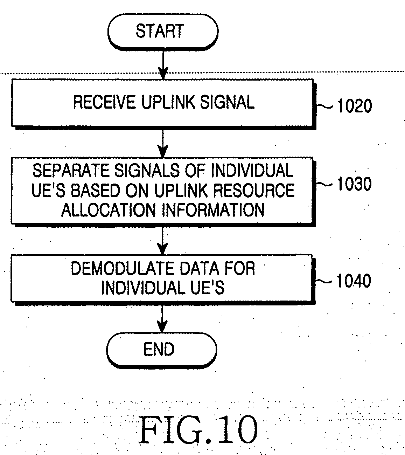

FIG. 10 is a flowchart illustrating an uplink reception operation in the Node B according to an exemplary embodiment of the present invention.

Referring to FIG. 10, the Node B receives an uplink signal in step 1020 and separates signals sent by individual UEs from the uplink signals based on predetermined resource allocation information for the uplink in step 1030. In step 1040, the Node B recovers data symbols for the UEs from the separated signals.

As is apparent from the above description, the present invention enables simple signaling of resource allocation information in such a way that a sufficient frequency diversity gain and a single carrier effect are achieved without increasing signaling overhead, even when two or more subcarrier sets are allocated to one UE. Therefore, resource allocation is effectively carried out.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

## Claims

1. A method for allocating frequency resources in a Frequency Division Multiple Access (FDMA) communication system, comprising:

   allocating at least one of subbands mapped to subcarrier sets in a frequency domain to a Mobile Station (MS), a subband index of each of the subbands being a Bit-Reverse Order (BRO) representation of the binary value of an offset indicating the position of a first subcarrier in a subcarrier set corresponding to the each subband; sending resource allocation information indicating the allocated at least one subband to the MS; and performing one of data transmission and reception to and from the MS in at least one subcarrier set corresponding to the at least one subband indicated by the resource allocation information.

2. The method of claim 1, further comprising allocating subbands with successive indexes to the MS.

3. The method of claim 1, wherein the resource allocation information indicates one node representing the allocated at least one subband in a tree structure in which nodes in a lowest layer represent the subband indexes, respectively, nodes in a highest layer represent the total subbands, and nodes in at least one intermediate layer are linked to one mother node and two child nodes and represent subband indexes of the child nodes.

4. The method of claim 1, wherein the resource allocation information indicates one of a first subband index and a last subband index of resources allocated to each of MSs communicating within a cell.

5. The method of claim 1, wherein if the number of available subcarrier sets R is a power of 2, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset and $y_x$ denotes a subband index corresponding to the subcarrier set offset x.

6. The method of claim 1, wherein if the number of available subcarriers R is not a power of 2, the subcarrier sets are mapped to the subbands according to

$$y_x = r_x \cdot 2^Q + \sum_{q=0}^{Q-1} c_{x,Q-(q+1)} \cdot 2^q$$

$$x = r_x + \sum_{q=0}^{Q-1} c_{x,q} \cdot 2^q, \quad c_x \in \{0,1\}$$

$$R = M \cdot 2^Q, \quad M \text{ is odd number}$$

$$Q = log_2(R/M)$$

$$r_x = x\%M$$

where x denotes a subcarrier set offset and $y_x$ denotes a subband index corresponding to the subcarrier set offset x.

7. The method of claim 1, wherein if the number of available subcarriers R is less than a power of 2 by 1, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

8. A method for being allocated frequency resources in a Frequency Division Multiple Access (FDMA) communication system, comprising:

receiving from a Base Station (BS) resource allocation information indicating at least one of subbands mapped to subcarrier sets in a frequency domain, allocated to a Mobile Station (MS), a subband index of each of the subbands being a Bit-Reverse Order (BRO) representation of the binary value of an offset indicating the position of a first subcarrier in a subcarrier set corresponding to the each subband; and

performing one of data transmission and reception to and from the BS in at least one subcarrier set corresponding to the at least one subband indicated by the resource allocation information.

9. The method of claim 8, wherein the resource allocation information indicate subbands with successive indexes.

10. The method of claim 8, wherein the resource allocation information indicates one node representing the allocated at least one subband in a tree structure in which nodes in a lowest layer represent the subband indexes, respectively, nodes in a highest layer represent the total subbands, and nodes in at least one intermediate layer are linked to one mother node and two child nodes and represent subband indexes of the child nodes.

11. The method of claim 8, wherein the resource allocation information indicates one of a first subband index and a last subband index of resources allocated to each of MSs communicating within a cell.

12. The method of claim 8, wherein if the number of available subcarrier sets R is a power of 2, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

13. The method of claim 8, wherein if the number of available subcarriers R is not a power of 2, the subcarrier sets are mapped to the subbands according to

$$y_x = r_x \cdot 2^Q + \sum_{q=0}^{Q-1} c_{x,Q-(q+1)} \cdot 2^q$$

$$x = r_x + \sum_{q=0}^{Q-1} c_{x,q} \cdot 2^q, \quad c_x \in \{0,1\}$$

$$R = M \cdot 2^Q, \quad M \text{ is odd number}$$

$$Q = log_2(R/M)$$

$$r_x = x\%M$$

where x denotes a subcarrier set offset, ranging from 0 to (R-2) and $y_x$ denotes a subband index corresponding to the subcarrier set offset x.

14. The method of claim 8, wherein if the number of available subcarriers R is less than a power of 2 by 1, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

15. An apparatus of a BS for allocating frequency resources in a Frequency Division Multiple Access (FDMA) communication system, comprising:

a scheduler for allocating at least one of subbands mapped to subcarrier sets in a frequency domain to a Mobile Station (MS), a subband index of each of the subbands being a Bit-Reverse Order (BRO) representation of the binary value of an offset indicating the position of a first subcarrier in a subcarrier set corresponding to the each subband;
a control channel transmitter for sending resource allocation information indicating the allocated at least one subband to the MS; and
a data transceiver for performing one of data transmission and reception to and from the MS in at least one subcarrier set corresponding to the at least one subband indicated by the resource allocation information.

16. The apparatus of claim 15, wherein the scheduler allocates subbands with successive indexes to the MS.

17. The apparatus of claim 15, wherein the resource allocation information indicates one node representing the allocated at least one subband in a tree structure in which nodes in a lowest layer represent the subband indexes, respectively, nodes in a highest layer represent the total subbands, and nodes in at least one intermediate layer are linked to one mother node and two child nodes and represent subband indexes of the child nodes.

18. The apparatus of claim 15, wherein the resource allocation information indicates one of a first subband index and a last subband index of resources allocated to each of MSs communicating within a cell.

19. The apparatus of claim 15, wherein if the number of available subcarrier sets R is a power of 2, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

**20.** The apparatus of claim 15, wherein if the number of available subcarriers R is not a power of 2, the subcarrier sets are mapped to the subbands according to

$$y_x = r_x \cdot 2^Q + \sum_{q=0}^{Q-1} c_{x,Q-(q+1)} \cdot 2^q$$

$$x = r_x + \sum_{q=0}^{Q-1} c_{x,q} \cdot 2^q, \quad c_x \in \{0,1\}$$

$$R = M \cdot 2^Q, \quad M \text{ is odd number}$$

$$Q = log_2(R/M)$$

$$r_x = x\%M$$

where x denotes a subcarrier set offset, ranging from 0 to (R-2) and $y_x$ denotes a subband index corresponding to the subcarrier set offset x.

**21.** The apparatus of claim 15, wherein if the number of available subcarriers R is less than a power of 2 by 1, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

**22.** An apparatus of a Mobile Station (MS) for being allocated frequency resources in a Frequency Division Multiple Access (FDMA) communication system, comprising:

a control channel receiver for receiving from a BS resource allocation information indicating at least one of subbands mapped to subcarrier sets in a frequency domain, allocated to the MS, a subband index of each of the subbands being a Bit-Reverse Order (BRO) representation of the binary value of an offset indicating the position of a first subcarrier in a subcarrier set corresponding to the each subband; and
a data transceiver for performing one of data transmission and reception to and from the BS in at least one subcarrier set corresponding to the at least one subband indicated by the resource allocation information.

**23.** The apparatus of claim 22, wherein the resource allocation information indicate subbands with successive indexes.

**24.** The apparatus of claim 22, wherein the resource allocation information indicates one node representing the allocated at least one subband in a tree structure in which nodes in a lowest layer represent the subband indexes, respectively, nodes in a highest layer represent the total subbands, and nodes in at least one intermediate layer are linked to one mother node and two child nodes and represent subband indexes of the child nodes.

**25.** The apparatus of claim 22, wherein the resource allocation information indicates one of a first subband index and a last subband index of resources allocated to each of MSs communicating within a cell.

**26.** The apparatus of claim 22, wherein if the number of available subcarrier sets R is a power of 2, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

**27.** The apparatus of claim 22, wherein if the number of available subcarriers R is not a power of 2, the subcarrier sets are mapped to the subbands according to

$$y_x = r_x \cdot 2^Q + \sum_{q=0}^{Q-1} c_{x,Q-(q+1)} \cdot 2^q$$

$$x = r_x + \sum_{q=0}^{Q-1} c_{x,q} \cdot 2^q, \quad c_x \in \{0,1\}$$

$$R = M \cdot 2^Q, \quad M \text{ is odd number}$$

$$Q = log_2(R/M)$$

$$r_x = x\%M$$

where x denotes a subcarrier set offset, ranging from 0 to (R-2) and $y_x$ denotes a subband index corresponding to the subcarrier set offset x.

28. The apparatus of claim 22, wherein if the number of available subcarriers R is less than a power of 2 by 1, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

29. A method for allocating frequency resources in a Frequency Division Multiple Access (FDMA) communication system, comprising:

mapping subbands to subcarrier sets in a frequency domain, a subband index of each of the subbands being a Bit-Reverse Order (BRO) representation of the binary value of an offset indicating the position of a first subcarrier in a subcarrier set corresponding to the each subband and the subcarrier sets being cyclically shifted using a different cyclic shift for each cell;
allocating at least one of the subbands to a Mobile Station (MS);
sending resource allocation information indicating the allocated at least one subband to the MS; and
performing one of data transmission and reception to and from the MS in at least one subcarrier set corresponding to the at least one subband indicated by the resource allocation information.

30. The method of claim 29, wherein if the number of available subcarriers R is less than a power of 2 by 1, the subcarrier sets are mapped to the subbands according to

$$y_x = \sum_{q=0}^{Q-1} c_{x,Q-(q+1)} \cdot 2^q$$

$$x = \sum_{q=0}^{Q-1} c_{x,q} \cdot 2^q, \quad c_x \in \{0,1\}$$

$$Q = log_2(R)$$

where x denotes a subcarrier set offset, ranging from 0 to (R-2) and $y_x$ denotes a subband index corresponding to the subcarrier set offset x.

31. The method of claim 29, wherein the cyclic shift value is changed every predetermined number of Orthogonal Frequency Division Multiplexing (OFDM) symbols.

32. The method of claim 29, further comprising cyclically shifting subcarrier set offsets corresponding to a predetermined number of subbands forming a subband group using the cyclic shift value.

EP 1 819 118 A2

R (130)

subcarrier (110)

Frequency

1 Subcarrier set (120)

FIG.1

FIG.2

EP 1 819 118 A2

UE#1
(310)

R (313)

(311) Offset (x)  0  1  2  3  4  5  6  7  8  9  10 11 12 13 14 15

(312) Index (y)  0  8  4  12  2  10  6  14  1  9  5  13  3  11  7  15

Frequency

Resources
allocated to UE#1 (314)

UE#2
(320)

Frequency

Resources
allocated to UE#2 (321)

FIG.3

(414)  (1,0)
       Node 30

(420)
(R, offset)
Node x

(413)  (2,0)                                    (2,1)
       Node 28                                  Node 29

(412)  (4,0)              (4,2)                 (4,1)              (4,3)
       Node 24            Node 25               Node 26            Node 27

(411)  (8,0)      (8,4)      (8,2)      (8,6)      (8,1)      (8,5)      (8,3)      (8,7)
       Node 16    Node 17    Node 18    Node 19    Node 20    Node 21    Node 22    Node 23

(410)  Index0   Index1   Index2   Index3   Index4   Index5   Index6   Index7   Index8   Index9   Index10  Index11  Index12  Index13  Index14  Index15
       (16,0)   (16,8)   (16,4)   (16,12)  (16,2)   (16,10)  (16,6)   (16,14)  (16,1)   (16,9)   (16,5)   (16,13)  (16,3)   (16,11)  (16,7)   (16,5)
       Node 0   Node 1   Node 2   Node 3   Node 4   Node 5   Node 6   Node 7   Node 8   Node 9   Node 10  Node 11  Node 12  Node 13  Node 14  Node 15

# FIG.4

EP 1 819 118 A2

Base Station : Transmitter (510)

511

Downlink scheduler

512

Data symbol generator for UE 1

Data symbol generator for UE 2

513

514

Data symbol generator for UE N

515

S/P

516

Mapper

517

IFFT

518

P/S

519

GI Adder

520

FIG.5A

UE (Mobile) : Receiver (530)

Control channel decoder —535

531

532

533

534

536

537

GI Remover

S/P

FFT

Demapper

P/S

Data channel decoder —538

FIG.5B

UE (Mobile) : Transmitter (610)

UL control
channel decoder

611

612

Data symbol
generator

613

S/P

614

FFT

615

Mapper

616

IFFT

617

P/S

618

GI adder

619

FIG.6A

FIG.6B

EP 1 819 118 A2

START

DOWNLINK SCHEDULING (GENERATE
RESOURCE ALLOCATION INFORMATION
AND CONTROL INFORMATION)  — 720

GENERATE DATA SYMBOLS
FOR INDIVIDUAL UE'S  — 730

MAP DATA SYMBOLS TO FREQUENCY
RESOURCES  — 740

SEND TIME DOMAIN SIGNAL ON
RADIO CHANNEL  — 750

END

FIG.7

START

DOMOD & OBTAIN DOWNLINK CONTROL INFO. ~820

830

FREQUENCY RESOURCES ALLOCATED? → NO

YES

EXTRACT RECEIVED SIGNAL ON ALLOCATED FREQUENCY RESOURCES ~840

DEMODULATE DATA ~850

END

FIG.8

START

DEMOD & OBTAIN UPLINK
CONTROL INFO                          ∼ 920

FREQUENCY RESOURCES
ALLOCATED?                    930        NO

YES

GENERATE UPLINK DATA SIGNAL           ∼ 940

SEND DATA SIGNAL ON
ALLOCATED FREQUENCY RESOURCES         ∼ 950

END

FIG.9

START

RECEIVE UPLINK SIGNAL ~1020

SEPARATE SIGNALS OF INDIVIDUAL
UE'S BASED ON UPLINK RESOURCE ~1030
ALLOCATION INFORMATION

DEMODULATE DATA FOR
INDIVIDUAL UE'S ~1040

END

# FIG.10

R = 12

Offset  0 1 2 3 4 5 6 7 8 9 10 11                                    Frequency

Resources for user A (1110)

Resources for user B (1120)

Resources for user C (1130)

Resources for user D (1140)

Resources for user E (1150)

Resources for user F (1160)

FIG.11

EP 1 819 118 A2